# EUROPEAN PATENT APPLICATION

(11) **EP 4 759 690 A1**
(43) Date of publication of application: **17.06.2026**
(21) Application number: 24851465.5
(22) Date of filing: 03.07.2024
(51) Int. Cl.: B62D 57/02, B60B 19/00, B62D 61/00

(54) **MOVING DEVICE, AND CONTROL METHOD AND CONTROL PROGRAM FOR MOVING DEVICE**

(30) Priority: 08.08.2023 JP 2023129166
(71) Applicant: Sumitomo Heavy Industries, Ltd., Tokyo 141-6025 (JP)
(72) Inventor: FUJIMOTO, Hirokazu, Yokosuka-shi, Kanagawa 237-8555 (JP); ETO, Haruhiko, Yokosuka-shi, Kanagawa 237-8555 (JP)
(74) Representative: Louis Pöhlau Lohrentz
(86) International application number: PCT/JP2024/024055
(87) International publication number: WO 2025/033034

(57) **Abstract**

A traveling robot 10 includes: a plurality of wheels 16 supported by a frame 20, and a control unit 37. The control unit 37 detects lift-off of the wheel 16, and, in a case where lift-off of one wheel 16 is detected, controls operations of the wheels 16 excluding the lifted-off one wheel 16 among the plurality of wheels 16 and causes the lifted-off one wheel to make ground contact.

## Description

### Technical Field

The present invention relates to a moving device, a control method for the moving device, and a control program for the moving device.

### Background Art

PTL 1 discloses a moving device which can travel on a wall surface while adhering four wheels to the wall surface by using a magnetic force. In this type of moving device, a back-driving available motor is adopted for driving a magnet incorporated into the wheel. In this way, the magnet can be passively adhered to a traveling surface of a magnetic body.

### Citation List

### Patent Literature

[PTL 1] International Publication No. WO2021/247275

### Summary of Invention

### Technical Problem

In the moving device of the related art described above, when the wheel comes off from a road surface to cause lift-off, it becomes difficult to continue the traveling.

An object of the present invention is to allow a wheel to be suitably returned from lift-off.

### Solution to Problem

A moving device according to the present invention includes:
a plurality of wheels supported by a vehicle body;
a detection unit that detects lift-off of the wheel; and
a control unit that, in a case where the detection unit detects lift-off of one wheel, controls operations of the wheels excluding the one wheel among the plurality of wheels and causes the one wheel to make ground contact.

### Advantageous Effects of Invention

According to the present invention, the wheel can be suitably returned from lift-off.

### Brief Description of Drawings

FIG. 1A is a plan view of a traveling robot according to an embodiment.
FIG. 1B is a perspective view of the traveling robot according to the embodiment.
FIG. 2A is a sectional view taken along a line perpendicular to a Y direction, showing a structure of a wheel according to the embodiment.
FIG. 2B is a sectional view taken along a line perpendicular to an X direction, showing the structure of the wheel according to the embodiment.
FIG. 3 is a block diagram showing a schematic control configuration of the traveling robot according to the embodiment.
FIG. 4 is a flowchart showing a procedure of lift-off return processing according to the embodiment.
FIG. 5A is a diagram showing an example of a change in a speed of the wheel when the wheel has lifted off.
FIG. 5B is a diagram showing an example of a change in an electric current value of a wheel drive unit when the wheel has lifted off.
FIG. 5C is a diagram showing an example of a change in an angle of a magnet when the wheel has lifted off.
FIG. 6A is a diagram for describing an operation pattern A of a lift-off return operation according to the embodiment.
FIG. 6B is a diagram for describing the operation pattern A of the lift-off return operation according to the embodiment.
FIG. 6C is a diagram for describing the operation pattern A of the lift-off return operation according to the embodiment.
FIG. 7A is a diagram for describing an operation pattern B of the lift-off return operation according to the embodiment.
FIG. 7B is a diagram for describing the operation pattern B of the lift-off return operation according to the embodiment.
FIG. 7C is a diagram for describing the operation pattern B of the lift-off return operation according to the embodiment.
FIG. 8A is a diagram for describing a method of selecting a lift-off return operation pattern according to the embodiment.
FIG. 8B is a diagram for describing a method of selecting the lift-off return operation pattern according to the embodiment.
FIG. 9A is a diagram for describing an operation of the traveling robot in a case where the traveling robot moves rearward while causing the wheel returned from the lift-off to make ground contact, in the lift-off return processing according to the embodiment.
FIG. 9B is a diagram for describing an operation of the traveling robot in a case where the traveling robot moves rearward while causing the wheel returned from the lift-off to make ground contact, in the lift-off return processing according to the embodiment.
FIG. 9C is a diagram for describing an operation of the traveling robot in a case where the traveling robot moves rearward while causing the wheel returned from the lift-off to make ground contact, in the lift-off return processing according to the embodiment.
FIG. 10A is a diagram for describing the lift-off return operation in a case of a configuration in which a suspension mechanism functions about a roll axis.
FIG. 10B is a diagram for describing the lift-off return operation in a case of the configuration in which the suspension mechanism functions about the roll axis.
FIG. 10C is a diagram for describing the lift-off return operation in a case of the configuration in which the suspension mechanism functions about the roll axis.
FIG. 11A is a diagram for describing the lift-off return operation in a six-wheel rocker bogie system.
FIG. 11B is a diagram for describing the lift-off return operation in the six-wheel rocker bogie system.
FIG. 11C is a diagram for describing the lift-off return operation in the six-wheel rocker bogie system.
FIG. 11D is a diagram for describing the lift-off return operation in the six-wheel rocker bogie system.
FIG. 11E is a diagram for describing the lift-off return operation in the six-wheel rocker bogie system.
FIG. 11F is a diagram for describing the lift-off return operation in the six-wheel rocker bogie system.
FIG. 12 is a diagram for describing the lift-off return operation in a structure in which four-wheel units are connected by a universal joint.

### Description of Embodiments

Hereinafter, an embodiment according to the present invention will be described in detail with reference to the drawings.

### [Configuration of Traveling Robot]

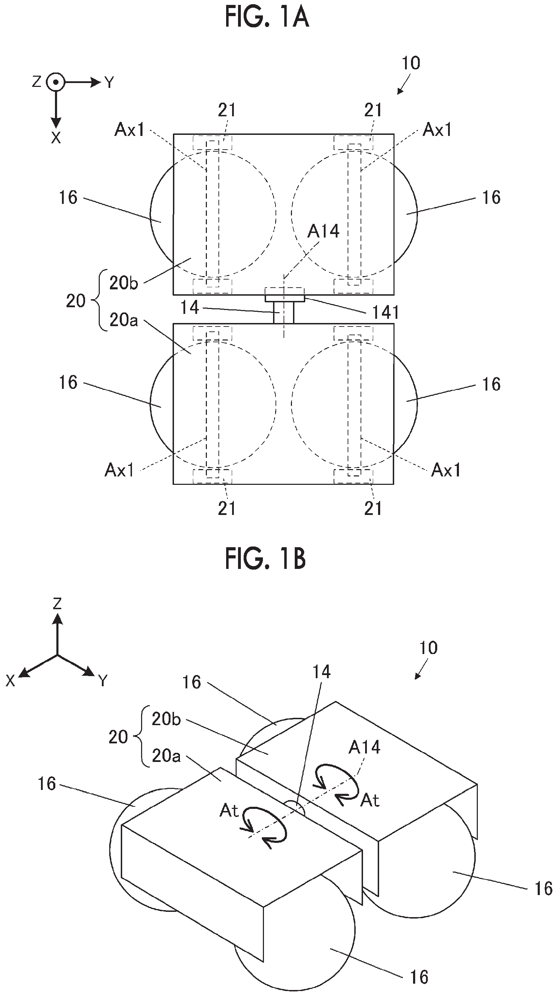

FIGS. 1A and 1B are a plan view and a perspective view of a traveling robot 10 according to the present embodiment.

As shown in FIGS. 1A and 1B, the traveling robot 10 is an example of a moving device according to the present invention, and is a robot that is capable of traveling on a floor surface, a wall surface, a ceiling surface, or the like by adhering wheels 16 to these surfaces. For example, the traveling robot 10 is remotely operated by an operator, or autonomously travels based on a predetermined traveling program.

Hereinafter, each direction of XYZ perpendicular to each other is set as shown in each drawing. In the present embodiment, an XY plane is a horizontal plane, and a Z direction is a vertical direction.

Specifically, the traveling robot 10 includes a plurality of wheels 16 and a frame 20 (a vehicle body) that supports (rotatably supports) the plurality of wheels 16.

Each of four wheels 16 is rotatably supported about a first rotary shaft Ax1 along an X direction. Each of the wheels 16 has a spherical shape (spherical shell shape), and is configured to transmit a driving force to a traveling surface in various directions. In addition, it is not essential that the wheel 16 has the spherical shape, and for example, the wheel 16 may have any shape such as a roller shape, as long as the wheel 16 can follow the traveling surface in various directions and can transmit the driving force to the traveling surface.

The frame 20 includes a first frame 20a and a second frame 20b which are arranged side by side in the X direction. Each of the first frame 20a and the second frame 20b rotatably supports two wheels 16 arranged side by side in a Y direction via the first rotary shaft Ax1.

The first frame 20a and the second frame 20b are connected to each other via a suspension mechanism 14.

The suspension mechanism 14 is a mechanism capable of changing a positional relationship between the first frame 20a and the second frame 20b in a twisting direction At. The twisting direction At is a rotation direction about the suspension shaft A14 that extends in a direction (the X direction) in which the first frame 20a and the second frame 20b are aligned. The mechanism is also called a rocker suspension mechanism. The suspension mechanism 14 can change the positional relationship between the first frame 20a and the second frame 20b in the twisting direction At, and can bring the four wheels 16 into contact with curved surfaces having various shapes.

In addition, a measuring instrument 141 such as an encoder for measuring a deformed degree is provided in the suspension mechanism 14.

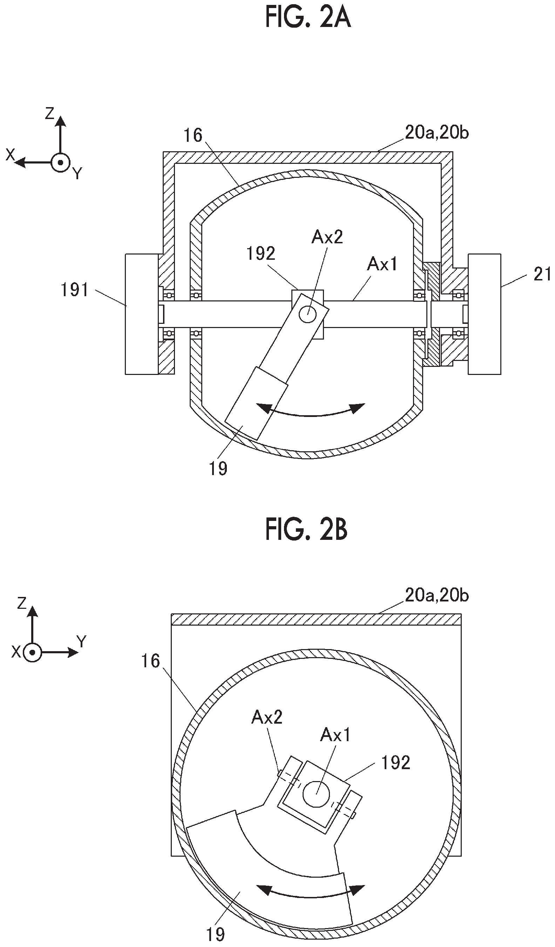

FIGS. 2A and 2B are sectional views showing the structure of the wheel 16, in which FIG. 2A is a sectional view taken along a line perpendicular to the Y direction, and FIG. 2B is a sectional view taken along a line perpendicular to the X direction.

As shown in FIGS. 2A and 2B, a magnet 19 and a link mechanism 192 that supports the magnet 19 to be displaceable are incorporated into each of the wheels 16.

The link mechanism 192 supports the magnet 19 to be rotatable in a rotation direction about the first rotary shaft Ax1 and a rotation direction about a second rotary shaft Ax2 intersecting (for example, perpendicular to) the first rotary shaft Ax1. The magnet 19 may be a permanent magnet, or may be an electromagnet. According to the configuration, in a case where the wheel 16 is brought into ground contact to a magnetic body such as iron, the magnet is attracted to a ground surface, so that the wheel 16 is adhered to the ground surface. Therefore, the traveling robot 10 can be adhered to the wall surface or the ceiling surface against gravity, and can travel on the surface. In addition, even in a case where the wheel 16 is brought into ground contact on a surface having various directions, due to the link mechanism 192, the magnet 19 faces the ground surface by independently and flexibly changing a direction from the wheel 16, and a strong suction force with respect to the ground surface is obtained.

In addition, a wheel drive unit 21 that rotationally drives the wheel 16, and a magnet drive unit 191 that rotationally drives the magnet 19 are provided in each of the wheels 16.

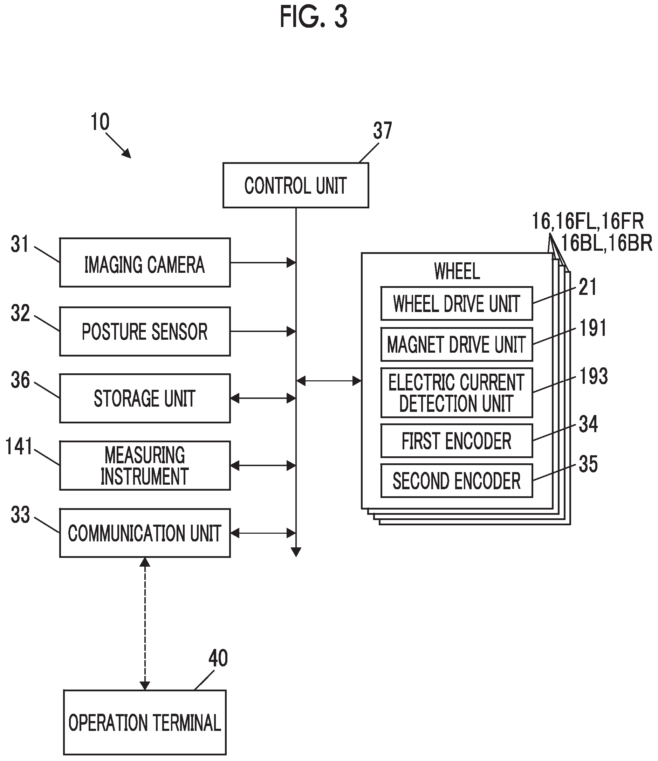

The wheel drive unit 21 is a motor (for example, a gear motor) capable of controlling a rotation amount or a rotation speed, and rotates the wheel 16 about the same axis as that of the first rotary shaft Ax1. The rotation amount or the rotation speed of the wheel 16 is measured by a first encoder 34 (refer to FIG. 3).

The magnet drive unit 191 (magnet motor) is a motor (for example, a gear motor) capable of controlling a rotation amount or a rotation speed, and rotates the first rotary shaft Ax1 that supports the magnet 19. An electric current value of the magnet drive unit 191 is detected by an electric current detection unit 193 (refer to FIG. 3). For example, an orientation (direction) of the magnet 19 is detected by a second encoder 35 (refer to FIG. 3) which is a two-axis encoder. In addition, as the magnet drive unit 191, a back-driving available magnet drive unit is used in a case where a torque output is turned off.

According to the traveling robot 10 configured as described above, movements in various directions, such as turning, leftward turning, rightward turning, and straight advancing, become possible by controlling the rotation amount of each of the four wheels 16. Furthermore, even when the traveling surface is a curved surface, the suspension mechanism 14 enables the traveling robot 10 to travel in a state where all the four wheels 16 are brought into ground contact on the traveling surface.

FIG. 3 is a block diagram showing a schematic control configuration of the traveling robot 10.

As shown in the drawing, the traveling robot 10 includes, in addition to the above-described configuration, an imaging camera 31, a posture sensor 32, a communication unit 33, a storage unit 36, and a control unit 37.

The imaging camera 31 is mounted on the frame 20, for example, captures a front image in the traveling direction, and stores the image in the storage unit 36. It is desirable that the imaging camera 31 can acquire distance information together by adopting 3D-Light Detection and Ranging (LiDAR) or the like, for example.

The posture sensor 32 is mounted on the frame 20, and measures three-dimensional acceleration and an angular velocity of the frame 20, which are then output to the control unit 37. For example, the posture sensor 32 is an inertial measurement unit (IMU).

The communication unit 33 transmits and receives various types of information to and from an operation terminal 40 or the like of an operator through a predetermined communication network or the like, based on a predetermined wireless communication standard.

The storage unit 36 is a memory configured with, for example, a random access memory (RAM), a read only memory (ROM), or the like, stores various programs and data, and functions as a work region of the control unit 37.

For example, the control unit 37 includes a central processing unit (CPU) or the like, and controls an operation of each part of the traveling robot 10. Specifically, the control unit 37 operates the wheel drive unit 21 and the magnet drive unit 191, based on an operation command or the like from the operator through the communication unit 33, or deploys a program stored in advance in the storage unit 36, and executes various types of processing in cooperation with the deployed program.

### [Lift-off Return Processing]

Next, lift-off return processing of returning the wheel 16 from a lifted-off state will be described.

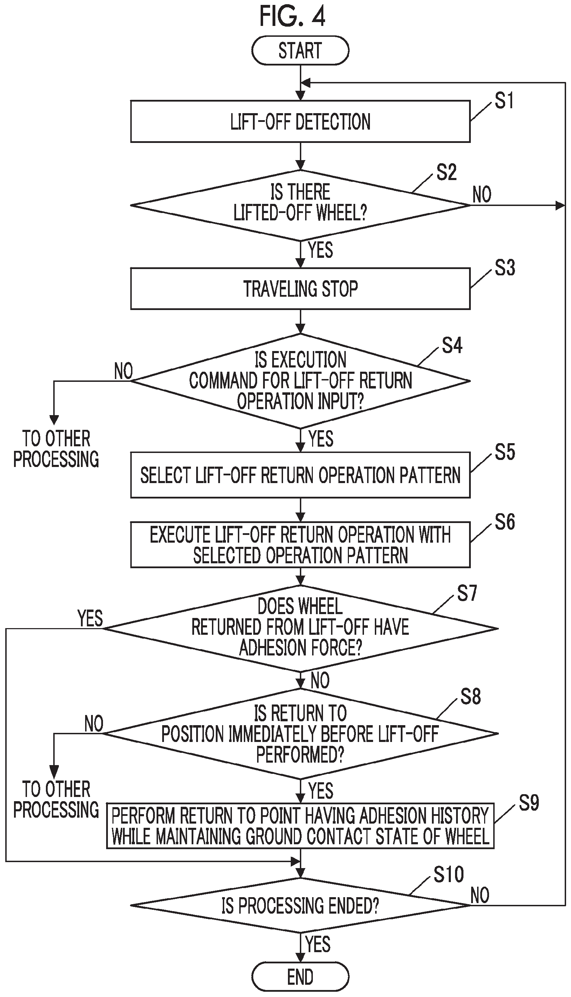

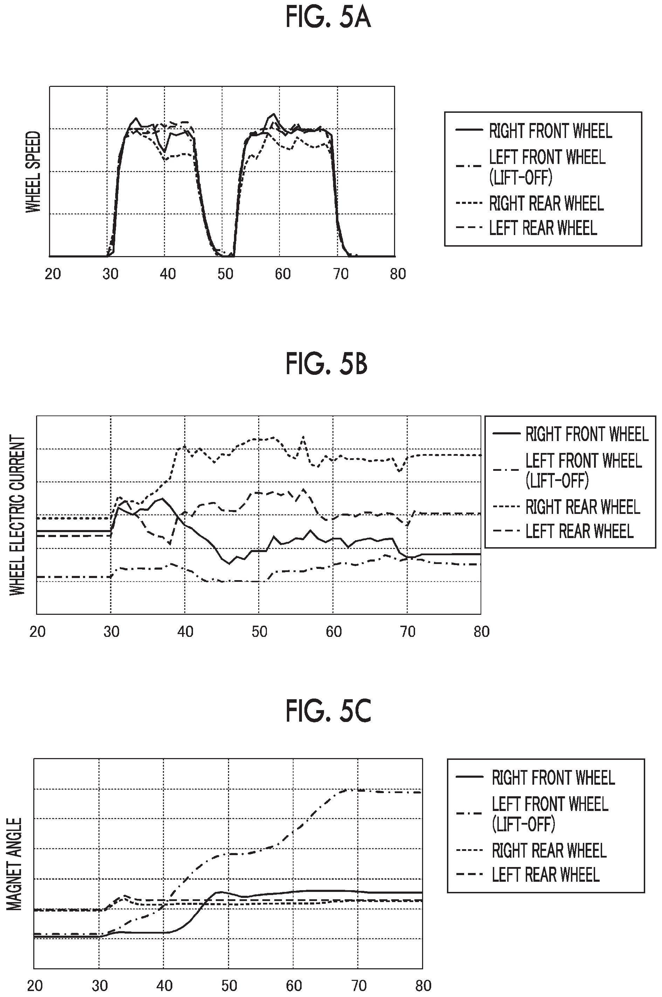

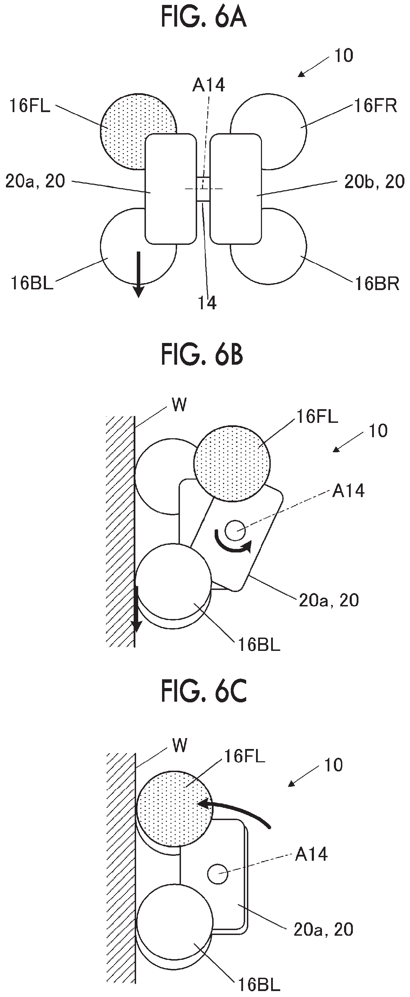

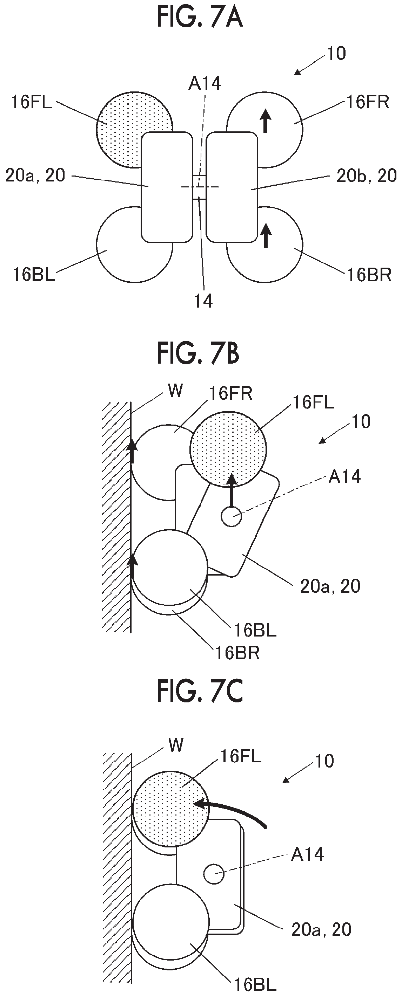

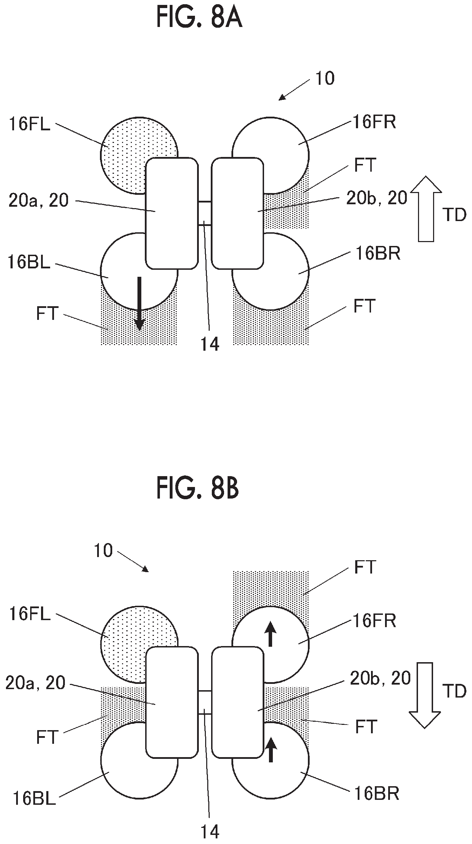

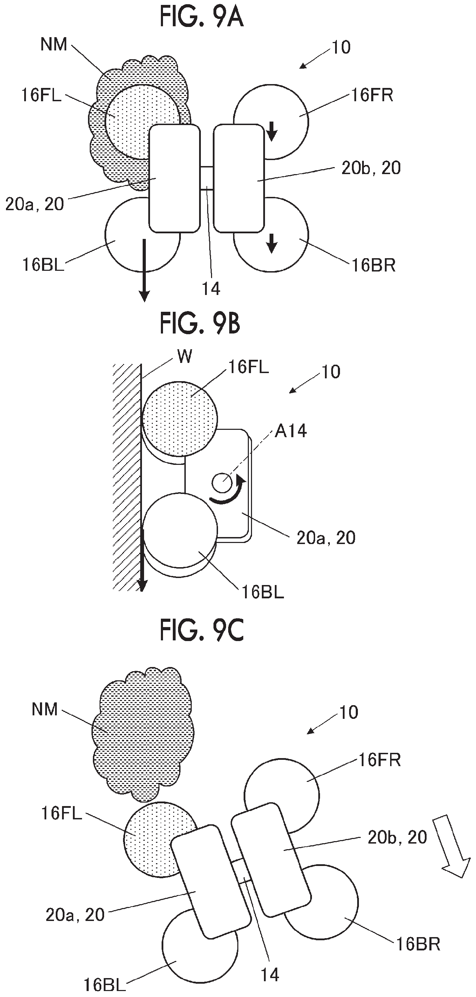

FIG. 4 is a flowchart showing a procedure of the lift-off return processing. FIGS. 5A, 5B, and 5C are diagrams showing examples of changes in the speed of the wheel 16, the electric current value of the wheel drive unit 21, and the angle of the magnet 19 when the wheel 16 has lifted off. FIGS. 6A, 6B, and 6C are diagrams for describing an operation pattern A of a lift-off return operation. FIGS. 7A, 7B, and 7C are diagrams for describing an operation pattern B of the lift-off return operation. FIGS. 8A and 8B are diagrams for describing a method of selecting a lift-off return operation pattern. FIGS. 9A, 9B, and 9C are diagrams for describing an operation of the traveling robot 10 in a case where the traveling robot 10 moves rearward while causing the wheel 16 returned from the lift-off to make ground contact.

In the drawings from FIG. 6A, the lifted-off wheel 16 is shown with a thin dot pattern.

The lift-off return processing is processing of, in a case where any one of the wheels 16 is in a "lift-off" state where the wheel is separated from the road surface, causing the wheel 16 to make ground contact on the road surface again. The lift-off return processing is executed by the control unit 37 reading and developing a corresponding program from the storage unit 36.

Here, a case where the traveling robot 10 travels on, for example, a wall surface W (a road surface) will be described (refer to FIG. 6A and the like). The wall surface W is made of a magnetic material except for a nonmagnetic portion NM (described later), and the magnet 19 is adhered to the wall surface W**.**

In addition, hereinafter, unless otherwise specified, the traveling robot 10 advances in the Y direction, and the first frame 20a is located on the left side toward the front side in the traveling direction, and the second frame 20b is located on the right side. In addition, among the four wheels 16, the wheels on the front side in the traveling direction (the Y direction) may be marked with "F", the wheels on the rear side may be marked with "B", the wheels on the left side toward the front side in the traveling direction may be marked with "L", and the wheels on the right side may be marked with "R", whereby the wheels may be identified. For example, the wheel on the left front side toward the front side in the traveling direction may be referred to as a "wheel 16FL", and the wheel on the right rear side may be referred to as a "wheel 16BR".

In addition, in the present embodiment, it is assumed that two or more wheels 16 do not lift off at the same time.

As shown in FIG. 4, when the lift-off return processing is executed and, for example, the traveling robot 10 starts predetermined autonomous traveling based on a traveling start command from the operation terminal 40, the control unit 37 performs lift-off detection (step S1).

Here, the control unit 37 detects the lift-off of the wheel 16, based on the speed of the wheel 16, the electric current value of the wheel drive unit 21, and the angle of the magnet 19.

Specifically, the control unit 37 determines that the wheel 16 has lifted off, in a case where the following three conditions are satisfied at the same time with respect to a certain wheel 16.
· Condition 1: The speed of the wheel 16 is equal to or higher than a first threshold (or there is a speed command) .
· Condition 2: The electric current value of the wheel drive unit 21 is equal to or lower than a second threshold.
· Condition 3: A difference between the angle of the magnet 19 about the first rotary shaft Ax1 and the average value of the same angle in the other three wheels is equal to or higher than a third threshold.

For example, in a case where the data as shown in FIGS. 5A, 5B, and 5C are obtained, it can be determined that the wheel 16FL on the left front side indicated by a one-dot chain line in the drawings has lifted off.

However, all of the three parameters, that is, the speed of the wheel 16, the electric current value of the wheel drive unit 21, and the angle of the magnet 19, do not need to be used. The lift-off of the wheel 16 can be suitably detected by using at least one of the electric current value of the wheel drive unit 21 and the angle of the magnet 19.

The method of detecting the lift-off is not limited to the above-described method.

For example, the presence or absence of the lift-off may be determined by statistical processing using a learning model produced in advance by machine learning, based on the speed of the wheel 16, the electric current value of the wheel drive unit 21, and the angle of the magnet 19.

Alternatively, for example, whether or not the wheel 16 has lifted off may be determined by estimating a frictional force of the wheel 16 from a dynamic model of the traveling robot 10 using an observer or the like. In this case, the speed of the wheel 16, the electric current value of the wheel drive unit 21, and the angle of the magnet 19 may be input to an estimator of a dynamic model prepared in advance, and the frictional force generated in the wheel 16 may be estimated.

Furthermore, in addition to the three parameters, that is, the speed of the wheel 16, the electric current value of the wheel drive unit 21, and the angle of the magnet 19, a rotation angle of the suspension shaft A14 measured by the measuring instrument 141 or the posture information of the frame obtained by the posture sensor 32 may be used. In this way, the accuracy in detecting the lift-off can be improved.

Next, the control unit 37 determines whether or not there is a lifted-off wheel 16, based on the detection result in step S1 (step S2).

Then, in a case where it is determined that there is no lifted-off wheel 16 (step S2; No), the control unit 37 proceeds the processing to step S1 described above.

On the other hand, in a case where in step S2, it is determined that there is the lifted-off wheel 16 (step S2; Yes), the control unit 37 stops the traveling of the traveling robot 10 (step S3).

Next, the control unit 37 determines whether or not an execution command for the lift-off return operation is input (step S4).

In the lift-off return operation, there is a possibility that the traveling robot 10 may move unexpectedly for the operator or an unexpected result may occur. Therefore, in this step, the operator is caused to confirm the execution of the lift-off return operation. For example, in a case where the operator does not want to move the traveling robot 10 carelessly, such as when there is little space about the traveling robot 10, the operator may postpone the execution of the lift-off return operation.

Specifically, in this step, the control unit 37 notifies the operator that the wheel has lifted off, and prompts the operator to perform an input operation of whether or not to execute the lift-off return operation. For example, the control unit 37 displays the message "Do you want to perform the lift-off return operation? (Yes/No)" or the like on a display unit with respect to the operation terminal 40, and receives an input operation of the operator with respect to the display. Then, in a case where it is determined that the execution command for the lift-off return operation is not input (step S4; No), the control unit 37 proceeds to other processing. In this case, for example, the control unit 37 continues the traveling with the three wheels that are not lifted off, based on the operation of the operator.

On the other hand, in a case where it is determined that the execution command for the lift-off return operation is input (step S4; Yes), the control unit 37 selects the lift-off return operation pattern to be executed (step S5).

Here, the control unit 37 selects a safer operation pattern out of two lift-off return operation patterns, that is, an operation pattern A and an operation pattern B.

The two lift-off return operation patterns (operation patterns) are operations of causing the lifted-off wheel 16 to make ground contact again by controlling the posture of the traveling robot 10. Each operation pattern controls the posture of the traveling robot 10 by controlling an operation of at least one of the three wheels 16 that are not lifted off.

In the operation pattern A of the two operation patterns, the other wheel 16 on the same frame (vehicle body) side with respect to the lifted-off wheel 16 is caused to advance in a front-back direction on the side that is separated from the lifted-off wheel 16.

For example, as shown in FIGS. 6A and 6B, in a case where the wheel 16FL on the left front side toward the front side in the traveling direction has lifted off, in the operation pattern A, the wheel 16BL on the left rear side is caused to advance rearward. In this way, forward torque about the suspension shaft A14 is caused to act on the first frame 20a on the left side, so that the lifted-off wheel 16FL is caused to make ground contact again, as shown in FIG. 6C.

In the operation pattern B, at least one wheel 16 on a different frame (vehicle body) side with respect to the lifted-off wheel 16 is caused to advance in the front-back direction on the side approaching the lifted-off wheel 16.

For example, as shown in FIGS. 7A and 7B, in a case where the wheel 16FL on the left front side toward the front side in the traveling direction has lifted off, in the operation pattern B, the two wheels 16FR and 16BR on the right side are caused to advance forward. In this way, a force in a forward direction is caused to act on the first frame 20a on the left side via the suspension shaft A14, so that the lifted-off wheel 16FL is caused to make ground contact again, as shown in FIG. 7C.

Specifically, in step S5, the control unit 37 determines which of the operation pattern A and the operation pattern B is safer, based on the traveling direction of the traveling robot 10 immediately before the lift-off. The road surface FT (refer to FIGS. 8A and 8B) on the side on which the traveling robot 10 has advanced immediately before the lift-off has the traveling history and is considered to be capable of being adhered thereto again. Therefore, it can be determined that the operation pattern for a return to the side on which the traveling robot 10 has advanced is safer.

That is, in step S5, the control unit 37 selects the operation pattern in which the operation direction of the wheel 16 to be executed during the operation pattern is the opposite direction to the traveling direction of the traveling robot 10 immediately before the lift-off.

For example, as shown in FIG. 8A, in a case where the wheel 16 on the front side with respect to the traveling direction TD immediately before the lift-off has lifted off, the operation pattern A of operating the wheel 16 in the opposite direction to the traveling direction TD is selected.

On the other hand, as shown in FIG. 8B, in a case where the wheel 16 on the rear side with respect to the traveling direction TD immediately before the lift-off has lifted off, the operation pattern B of operating the wheel 16 in the opposite direction to the traveling direction TD is selected.

Next, the control unit 37 executes the lift-off return operation with the operation pattern selected in step S4 (step S6).

In this way, the lifted-off wheel 16 is brought into ground contact again.

Next, the control unit 37 determines whether or not the wheel 16 that has returned from the lift-off generates an appropriate adhesion force with respect to the road surface (step S7). That is, an adhesion determination, which is a determination of whether the adhesion state of the wheel 16 is good or poor, is performed.

In this adhesion determination, first, the control unit 37 oscillates (rotates) the magnet 19 of the wheel 16 to be determined in a range in which the magnet 19 is not detached, and detects the electric current value of the magnet drive unit 191 at the maximum oscillation position at that time. The "range in which the magnet 19 is not detached" is a range in which the adhesion to the traveling surface by a magnetic force is not released.

Then, the control unit 37 determines whether or not the detected electric current value (absolute value thereof) of the magnet drive unit 191 at the maximum oscillation position exceeds a predetermined threshold, and in a case where it is determined that the electric current value exceeds the predetermined threshold, the control unit 37 determines that the wheel 16 is exhibiting an appropriate adhesion force with respect to the road surface.

In a case where in step S7, it is determined that the wheel 16 returned from the lift-off generates an appropriate adhesion force with respect to the road surface (step S7: Yes), the control unit 37 proceeds the processing to step S10 (described later).

In this case, since it can be determined that the magnet 19 of the wheel 16 is properly adhered to the adhesion surface (the wall surface W), the control unit 37 turns off the output of the magnet drive unit 191.

On the other hand, in a case where in step S7, it is determined that the wheel 16 returned from the lift-off does not generate an appropriate adhesion force with respect to the road surface (step S7; No), the control unit 37 determines whether or not to perform a return to the position immediately before the lift-off where the adhesion force is obtained, based on the operation of the operator (step S8).

In a case where the adhesion force between the wheel 16 and the road surface cannot be confirmed, there is a possibility that the road surface is the nonmagnetic portion NM. In this case, since there is a possibility that lift-off occurs again when the traveling is started as it is, it is safe to perform the return to the position immediately before the lift-off after the operator confirms the position. Therefore, in this step, the control unit 37 notifies the operator that the wheel 16 cannot obtain an appropriate adhesion force, and prompts the operator to perform an input operation of whether or not to return to the position immediately before the lift-off. For example, the control unit 37 displays the message "Do you want to move to an adhesion-able position immediately before the lift-off? (Yes/No)" or the like on the display unit with respect to the operation terminal 40, and receives an input operation of the operator with respect to this display.

Then, in a case where it is determined that the return to the position immediately before the lift-off is not performed (step S8; No), the control unit 37 proceeds to other processing. In this case, for example, the control unit 37 continues the traveling with the three wheels that are not lifted off, based on the operation of the operator.

On the other hand, in a case where in step S8, it is determined that the return to the position immediately before the lift-off is performed (step S8; Yes), the control unit 37 moves the wheel 16 to the position where the wheel 16 can be adhered while maintaining the ground contact state of the wheel 16 returned from the lift-off (step S9).

Specifically, the control unit 37 causes the other wheel 16 on the same frame side with respect to the wheel 16 returned from the lift-off to advance in the front-back direction on the side opposite to the lifted-off wheel 16 with a relatively large output compared to the wheel 16 on the different frame side, as shown in FIGS. 9A and 9B, for example. In the example of the drawing, the wheel 16BL on the left rear side is moved rearward with an output larger than the sum of the outputs of the two wheels 16FR and 16BR on the right side. In this way, as shown in FIG. 9C, the traveling robot 10 diagonally moves rearward while maintaining the ground contact state of the wheel 16 returned from the lift-off and dragging the wheel 16 on the different frame side from the wheel 16.

In a case where a cable for power supply or the like is routed in the traveling robot 10, the output of each wheel 16 is set in consideration of the tension by the cable. In addition, here, the search for the adhesion surface to which the wheel 16 (magnet 19) can be adhered may be performed in conjunction with the movement of the traveling robot 10. In the search for the adhesion surface, the magnet 19 is rotated in one direction in an angle range including separation from the current traveling surface, and from the angle of the magnet 19 at which the electric current value of the magnet drive unit 191 at this time is the largest, the angle at which the electric current value first becomes zero toward the negative angle side is set as a direction of a new adhesion surface. In this way, even in a case where a position where the wheel 16 can be adhered immediately before the lift-off is unknown, it is possible to cope with it.

Then, the control unit 37 determines whether or not to end the lift-off return processing (step S10), and in a case where it is determined that the lift-off return processing is not ended (step S10; No), the control unit 37 proceeds the processing to step S1 described above.

Then, for example, in a case where it is determined that the lift-off return processing is ended due to the completion of the movement to the target position, or the like (step S10; Yes), the control unit 37 ends the lift-off return processing.

### [Technical Effect of Present Embodiment]

As described above, according to the present embodiment, in a case where the lift-off of any one of the wheels 16 is detected, the operation of the wheel 16 excluding the lifted-off wheel 16 among the four wheels 16 is controlled, and the lifted-off wheel 16 is caused to make ground contact.

In this way, the wheel 16 can be suitably returned from the lift-off.

In addition, according to the present embodiment, the wheel drive unit 21 that individually drives the four wheels is controlled, and the torque in a direction that causes the lifted-off wheel 16 to make ground contact acts on the first frame 20a or the second frame 20b.

In this way, the first frame 20a or the second frame 20b that supports the wheel 16 can be suitably rotated to suitably return the wheel 16 from the lift-off.

In addition, according to the present embodiment, the first frame 20a and the second frame 20b are connected to each other via the suspension mechanism 14 capable of changing a positional relationship between the first frame 20a and the second frame 20b in the twisting direction.

Therefore, the positional relationship between the first frame 20a and the second frame 20b can be changed in the twisting direction by the suspension mechanism 14, so that the wheel 16 can be suitably returned from the lift-off.

In addition, according to the present embodiment, the operation pattern for the wheels 16 excluding the lifted-off wheel 16 is selected based on the traveling direction TD of the traveling robot 10 immediately before wheel lift-off of the wheel 16.

In this way, the lift-off return operation can be executed with respect to the road surface where there is the traveling history. As a result, the lift-off return operation can be more safely performed.

In addition, according to the present embodiment, the lift-off of the wheel 16 is detected based on at least one of the angle (direction) of the magnet 19 about the first rotary shaft Ax1 and the output of the wheel drive unit 21.

In this way, the lift-off can be suitably detected by using an internal sensor incorporated into the traveling robot 10.

In addition, according to the present embodiment, in a case where the lift-off of the wheel 16 is detected, the lift-off is notified to the operator. Then, the control to cause the lifted-off wheel 16 to make ground contact is executed based on the execution command of the operator.

In this way, a situation in which the traveling robot 10 falls into a state unexpected by the operator due to the lift-off return operation can be avoided.

### [Modification Example 1]

In the above-described embodiment, the suspension shaft A14 is disposed along a right-left direction vertical to the traveling direction, that is, the suspension mechanism 14 is made to function about a pitch axis. However, even in a configuration in which the suspension mechanism 14 functions about a roll axis, the lift-off can be suitably returned by applying a lift-off return operation pattern described below.

In the lift-off return operation pattern in this case, with respect to the lifted-off wheel 16, the wheel 16 on the same side as the lifted-off wheel 16 in the right-left direction, out of the two wheels 16 on the different frame (vehicle body) sides, is caused to advance in the front-back direction on the side that is separated from the lifted-off wheel 16, and the wheel 16 on the different side from the lifted-off wheel 16 in the right-left direction is caused to advance in the front-back direction on the side approaching the lifted-off wheel 16.

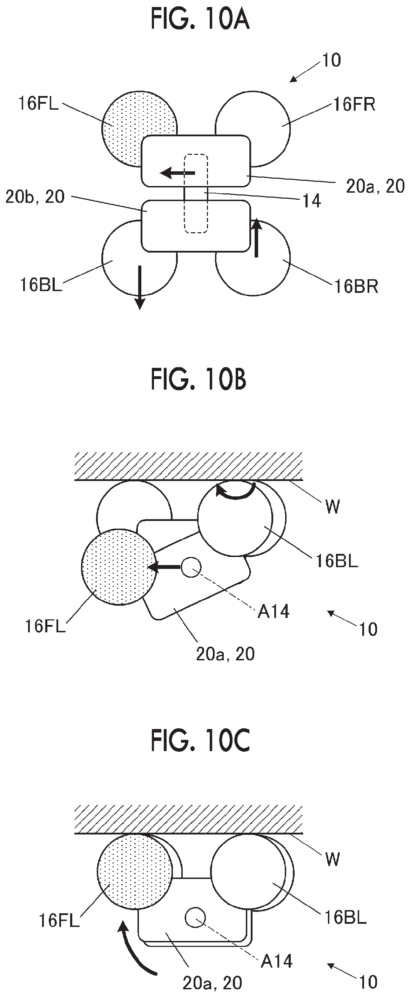

For example, as shown in FIGS. 10A and 10B, in a case where the wheel 16FL on the left front side toward the front side in the traveling direction has lifted off, the wheel 16BL on the left rear side is moved rearward and the wheel 16BR on the right rear side is moved forward. In this way, a force in the left direction is caused to act on the first frame 20a on the front side via the suspension shaft A14 to cause the lifted-off wheel 16FL to make ground contact again, as shown in FIG. 10C. Such a lift-off return operation pattern may be executed in step S6 of the lift-off return processing. In this case, step S5 may be omitted.

### [Modification Example 2]

In the above embodiment, a case where the number of wheels 16 is four has been described. However, the present invention can also suitably be applied to a case where the number of wheels is other than four.

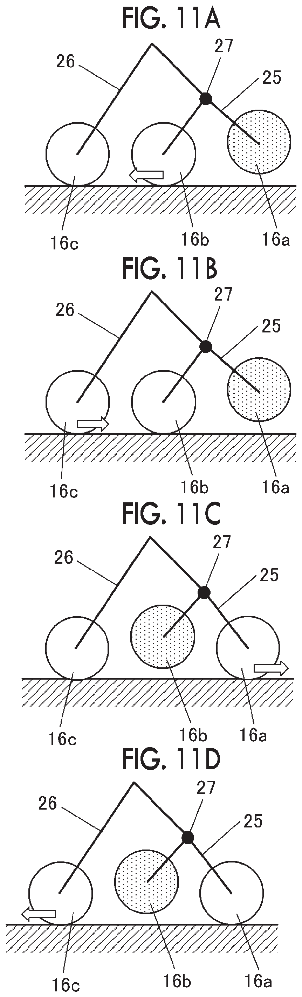

For example, a case where a suspension mechanism of a six-wheel (three wheels on one side) rocker bogie system is applied will be described. In the six-wheel rocker bogie system, as shown in FIG. 11A, a first wheel 16a and a second wheel 16b are supported at both ends of a bogie arm 25. One end of a rocker arm 26 is connected to the bogie arm 25 via a passive joint 27, and a third wheel 16c is supported at the other end of the rocker arm 26. The frame 20 is connected to the rocker arm 26.

In such a six-wheel rocker bogie system, in a case where the first wheel 16a has lifted off, as shown in FIG. 11A, the second wheel 16b is caused to advance to the side that is separated from the first wheel 16a, or as shown in FIG. 11B, the third wheel 16c is caused to advance to the side approaching the first wheel 16a.

In a case where the second wheel 16b has lifted off, as shown in FIG. 11C, the first wheel 16a is caused to advance to the side that is separated from the second wheel 16b, or as shown in FIG. 11D, the third wheel 16c is caused to advance to the side that is separated from the second wheel 16b.

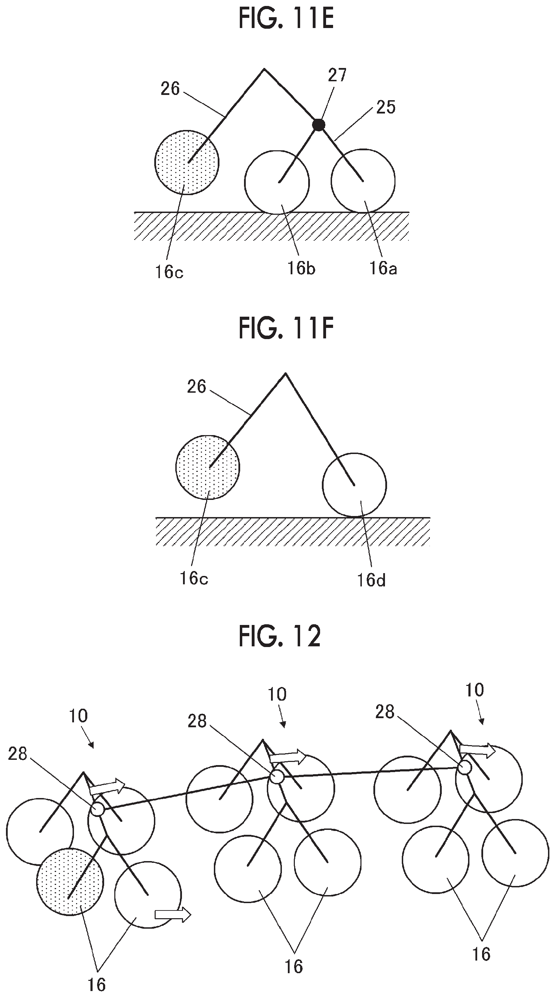

In a case where the third wheel 16c has lifted off as shown in FIG. 11E, as shown in FIG. 11F, the first wheel 16a and the second wheel 16b are replaced with one virtual wheel 16d, and the same consideration as in the case of the four-wheel can be made. Therefore, in this case, the operation pattern A or the operation pattern B described above may be applied.

In addition, in a case of an eight-wheel (four wheels on one side) rocker bogie system, there are two sets of the two wheels 16 connected by the bogie arm, and it is assumed that the two sets of the bogie arms are connected by the rocker arm. Therefore, the lift-off return operation described above may be extended and applied.

In addition, as shown in FIG. 12, in a case of a structure in which a plurality of units of the four-wheel traveling robot 10 are connected by a universal joint 28, the unit in which the lift-off has occurred performs the lift-off return operation in the four-wheel in the same manner as the lift-off return processing described above. The other units in which the lift-off has not occurred perform an operation in cooperation with the lift-off return operation such that restriction (connection) by the universal joint 28 does not hinder the return operation of the corresponding unit. For example, the lift-off return may be performed while controlling the torque in the compliance control.

### [Others]

Although the embodiment of the present invention has been described above, the present invention is not limited to the above embodiment.

For example, a motor that drives the suspension shaft A14 is mounted, and in the lift-off return operation, in addition to the control of the wheel 16 that has not lifted off, the angle of the suspension shaft A14 may be controlled.

In addition, the imaging camera 31 may detect the situation about the traveling robot 10 and the lift-off return operation may be executed within an operable range based on the detection result thereof.

In addition, in the lift-off return operation, the operation of the wheel 16 may be set in advance (for example, a predetermined wheel 16 is rotated by 60 degrees or the like), and each wheel 16 may be controlled such that the rotation angle of the suspension shaft A14 (the relative angle between the two frames) detected by the measuring instrument 141 approaches zero. Alternatively, the operation pattern may be created by reinforcement learning.

In addition, the moving device according to the present invention may be applied to a traveling robot that moves on each part of a steel structure, for example, in shipbuilding and heavy industry fields, construction and building fields, infrastructure inspection and maintenance fields, and the like.

In addition, the details shown in the embodiment described above can be appropriately changed within a scope which does not depart from the concept of the invention.

### Industrial Applicability

As described above, the present invention is useful for suitably returning the wheel from the lift-off.

### Reference Signs List

10 traveling robot (moving device)
14 suspension mechanism
16 wheel
16FL wheel on the left front side
16FR wheel on the right front side
16BL wheel on the left rear side
16BR wheel on the left front side
16a first wheel
16b second wheel
16c third wheel
16d virtual wheel
19 magnet
20 frame (vehicle body)
20a first frame (first vehicle body)
20b second frame (second vehicle body)
21 wheel drive unit
32 posture sensor
37 control unit (detection unit, notification unit)
141 measuring instrument
191 magnet drive unit
A14 suspension shaft
At twisting direction
FT road surface (road surface on which the moving device has been traveling immediately before lift-off)
NM nonmagnetic portion
TD traveling direction immediately before lift-off
W wall surface (road surface)

## Claims

1. A moving device comprising:
a plurality of wheels supported by a vehicle body;
a detection unit that detects lift-off of the wheel; and
a control unit that, in a case where the detection unit detects lift-off of one wheel, controls operations of the wheels excluding the one wheel among the plurality of wheels and causes the one wheel to make ground contact.

2. The moving device according to claim 1,
wherein the control unit controls a wheel drive unit that individually drives the plurality of wheels, and causes torque in a direction that causes the one wheel to make ground contact to act on the vehicle body.

3. The moving device according to claim 1,
wherein the vehicle body includes a first vehicle body and a second vehicle body that individually support the wheels, and
the first vehicle body and the second vehicle body are connected to each other via a suspension mechanism capable of changing a positional relationship between the first vehicle body and the second vehicle body in a twisting direction.

4. The moving device according to claim 1,
wherein the control unit selects an operation pattern for the wheels excluding the one wheel, based on a traveling direction of the moving device immediately before wheel lift-off of the one wheel.

5. The moving device according to claim 1, further comprising:
a magnet that is incorporated into each of the plurality of wheels and is rotatably supported about a rotary shaft; and
a wheel drive unit that individually drives the plurality of wheels,
wherein the detection unit detects the lift-off of the wheel, based on at least one of an angle of the magnet about the rotary shaft and an output of the wheel drive unit.

6. The moving device according to claim 1, further comprising:
a notification unit that, in a case where the detection unit detects the lift-off of the one wheel, notifies an operator of the lift-off,
wherein the control unit executes control to cause the one wheel to make ground contact, based on an execution command of the operator.

7. A control method for a moving device, the control method being executed by a control unit of the moving device including a plurality of wheels supported by a vehicle body, the control method comprising:
a step of detecting lift-off of the wheel, and
a step of, in a case where lift-off of one wheel is detected in the above step, controlling operations of the wheels excluding the one wheel among the plurality of wheels and causing the one wheel to make ground contact.

8. A control program for a moving device, causing a computer of the moving device provided with a plurality of wheels supported by a vehicle body to function as
a detection unit that detects lift-off of the wheel, and
a control unit that, in a case where the detection unit detects lift-off of one wheel, controls operations of the wheels excluding the one wheel among the plurality of wheels and causes the one wheel to make ground contact.
